# FASCICULE DE BREVET EUROPEEN

(11) **EP 2 538 295 B1**
(45) Date de publication et mention de la délivrance du brevet: **26.05.2021**
(21) Numéro de dépôt: 11170948.1
(22) Date de dépôt: 22.06.2011
(51) Int. Cl.: G05B 19/4155

(54) **Exécution d'un programme piloté par l'opérateur**
Ausführung eines vom Bediener gesteuerten Programms
Execution of a program controlled by the operator

(43) Date de publication de la demande: 26.12.2012
(73) Titulaire: Tornos SA, 2740 Moutier (CH)
(72) Inventeur: Currat, Jacques, 2740 Moutier (CH)
(74) Mandataire: BOVARD AG

(56) Documents cités:
- EP-A1- 0 269 738
- EP-A1- 0 576 678
- FR-A1- 2 569 876
- US-A- 4 204 253
- US-A1- 2010 087 948

## Description

### DOMAINE DE L'INVENTION

L'invention se rapporte à un procédé de pilotage d'une machine-outil pour usiner une pièce. L'invention se rapporte aussi à un programme d'ordinateur ou une commande numérique et à un dispositif pour la mise en œuvre de ce procédé.

### DESCRIPTION DE L'ART ANTERIEUR

Une machine-outil telle qu'une décolleteuse, comprend généralement au moins une broche pour recevoir la pièce à usiner. Celle-ci se présente généralement sous forme d'une barre métallique ou non. Cette ou ces broches sont généralement agencées pour faire tourner la pièce à usiner autour de son ou de leurs axes. L'usinage même est effectué par des outils placés autour de la ou des broches. Le pilotage des machines-outils modernes est généralement contrôlé par une commande numérique.

La décolleteuse est une machine-outil de grande production, c'est-à-dire qu'elle est appelée à répéter plusieurs fois la même pièce. Cette particularité se traduit aussi par la possibilité d'utiliser une architecture de commande numérique différente de celle des commandes numériques traditionnelles. La différence d'architecture réside dans le besoin d'une exécution très rapide d'un même programme ou d'un même ensemble de programmes.

La présente invention se réfère à ce type de commande numérique qui répond à ce besoin particulier des décolleteuses. L'interpolateur (calculateur de trajectoires) effectue le calcul de l'ensemble des trajectoires avant le début de l'usinage et les résultats de ces calculs sont placés par exemple dans des tables circulaires qui seront ensuite exécutées en continu par les unités de pilotage des axes et des broches. Cette méthode permet d'une part de calculer et d'optimiser les mouvements sans les contraintes temporelles des commandes numériques traditionnelles et d'autre part d'exécuter les mouvements précalculés sans nécessiter de calculs compliqués en temps réel.

Une commande numérique de machine-outil permet l'exécution ou l'arrêt du programme d'usinage en mode automatique, elle permet aussi de l'exécuter en bloc à bloc et d'en moduler les vitesses des avances ou des rotations.

Le programme d'usinage ne peut toutefois pas être exécuté de manière sensitive sous le contrôle d'une manivelle électronique et il ne peut pas non plus être exécuté à l'envers.

D'autre part, la commande numérique de machines-outils n'offre pas d'outils pour permettre facilement l'exécution partielle d'un programme d'usinage, c'est-à-dire l'exécution sûre du programme à l'exclusion des parties concernant l'un ou l'autre des outils.

FR 2 569 876 concerne les techniques de visualisation appliquées à la commande numérique des machines-outils. Un système de commande numérique par ordinateur pour une machine-outil comporte notamment une mémoire qui contient des fichiers de données graphiques consistant en des séquences prédéterminées d'ordre graphique. Ces fichiers permettent de présenter directement sur un visuel d'un poste de commande numérique des informations graphiques telles que des aides au diagnostic, des schémas de configuration de pièce et des schémas de configuration de machine.

US 4 204 253 concerne un panneau de programmation comprenant, de préférence, un micro-processeur au moyen duquel un opérateur peut créer ou modifier la teneur des étapes d'un programme d'utilisateur à l'aide d'un certain nombre de moyens de choix et d'un certain nombre de moyens d'introduction de valeur sur la base d'indications rendues visibles sur des moyens d'affichage. Le programme d'utilisateur se trouve au service d'un système de commande de machine auquel le panneau de programmation peut être relié, de préférence à l'aide d'une liaison par barre-omnibus. Le panneau de programmation comprend des moyens de choix standards relatifs à ce que l'on nomme les mouvements élémentaires.

L'objet de la présente invention est de surmonter les problèmes des solutions connues.

### RESUME DE L'INVENTION

La présente invention propose donc une solution pour l'usinage d'une pièce sur une machine-outil en sélectionnant seulement des parties du programme initial comme expliquée plus en détail plus loin.

A cet effet, l'invention a pour objet un procédé de pilotage d'une machine-outil pour usiner une pièce selon la revendication 1.

La solution proposée possède plusieurs avantages. La solution proposée permet à l'opérateur de modifier facilement le programme d'usinage de la pièce. Selon un aspect de la présente invention, un affichage adapté est utilisé pour sélectionner les seules parties du programme que l'opérateur veut exécuter. Avantageusement la sélection du programme initial, est effectuée avant que le programme final soit transmis à la commande numérique pour l'exécution. De cette manière on tient compte des sélections pour vérifier et assurer le fonctionnement sans défaut du programme partiel.

L'invention a également pour objet un dispositif selon la revendication 10.

Les autres aspects de la présente invention se trouvent dans les revendications dépendantes.

### BREVE DESCRIPTION DES DESSINS

L'invention sera bien comprise à la lecture de la description ci-après faite à titre d'exemple non limitatif en regardant les dessins ci-annexés qui représentent schématiquement :
- - figure 1 :: l'exécution des opérations d'une ressource en fonction du temps selon un aspect de la présente invention,
- - figure 2 :: l'exécution des opérations de différentes ressources en fonction du temps selon un autre aspect de la présente invention, et
- - figure 3 :: un organigramme qui illustre le procédé pour usiner la pièce selon un aspect de la présente invention.

### DESCRIPTION DETAILLEE DES MODES DE REALISATION

En se reportant aux dessins, un procédé pour une machine-outil pour usiner une pièce selon différents aspects conformément à un exemple de la présente invention est maintenant expliqué plus en détail.

L'objet de l'invention se compose d'un procédé qui permettra à l'opérateur de sélectionner facilement les parties ou opérations du programme initial à exécuter ou à exclure de l'exécution par la commande numérique de la machine-outil. Avantageusement, le programme est modifié avant de le transmettre à la commande numérique de manière à tenir compte des sélections et à assurer le fonctionnement sans défaut du programme partiel.

Selon un aspect de la présente invention, la sélection est effectuée au moyen d'un menu adapté qui montre les opérations dans une représentation graphique, telle qu'un diagramme de Gantt. Une opération peut par exemple correspondre à un usinage spécifique de la pièce. Ensuite, le procédé permettra d'exécuter le programme d'usinage au rythme des mouvements de la manivelle électronique dans la mesure où les opérations d'usinage sont compatibles avec ce mode d'exécution. En utilisant la manivelle électronique les opérations d'usinage peuvent être exécutées en avant ou en arrière, ou elles peuvent être ralenties ou arrêtées. Pour les opérations d'usinage incompatibles avec ce mode d'exécution, l'opérateur aura le choix de la procédure normale en utilisant les touches « start » et « stop ». L'exécution en avant ou en arrière peut aussi être effectuée sous le contrôle de l'opérateur au moyen des touches « + », « - » et de l'override.

La possibilité d'exécuter un programme d'usinage partiellement ou complètement jusqu'à un endroit choisi et de faciliter le choix de cet endroit est ici lié à l'architecture de commande composée d'un calculateur qui prépare le programme d'usinage avant son exécution. Ici le calculateur est agencé pour afficher graphiquement le programme source afin de permettre d'en sélectionner les parties désirées, puis de le transformer ou de le compiler en un programme exécutable. Par l'usinage partiel on comprend un usinage où certains outils sont inactifs ou un usinage où seulement certaines opérations du programme exécutable initial sont exécutées.

Cette architecture originale permet donc de générer, à partir du programme d'usinage complet, la partie du programme correspondant exactement aux besoins de l'opérateur, principalement en phase de tests (réglage de la machine).

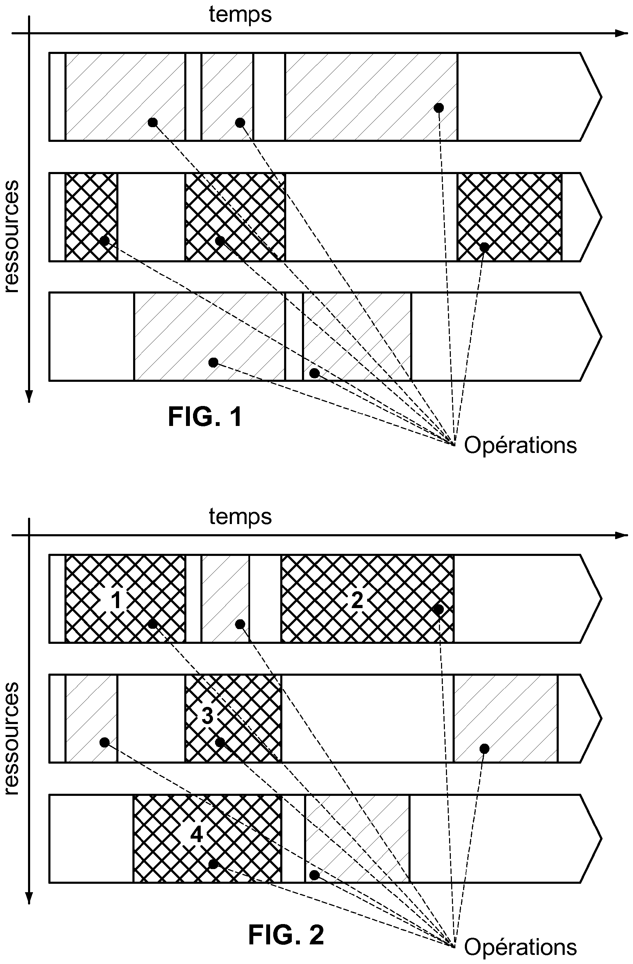

Ainsi, comme illustré sur la figure 1 l'opérateur peut par exemple choisir d'exécuter une seule ressource ou opération (les boîtes quadrillées) du programme d'usinage. Les ressources sont, par exemple, des outils différents. On peut donc exclure certaines ressources.

On peut aussi redéfinir l'ordre de l'exécution des ressources différentes comme illustré sur la figure 2. Le diagramme de la figure 2 montre que seules certaines opérations sont sélectionnées et qu'elles doivent être exécutées séquentiellement dans l'ordre des numéros. Les numéros de boîtes indiquent l'ordre de l'exécution des ressources. Par conséquent on peut exécuter une ou plusieurs opérations, en parallèle ou de manière séquentielle dans un ordre défini.

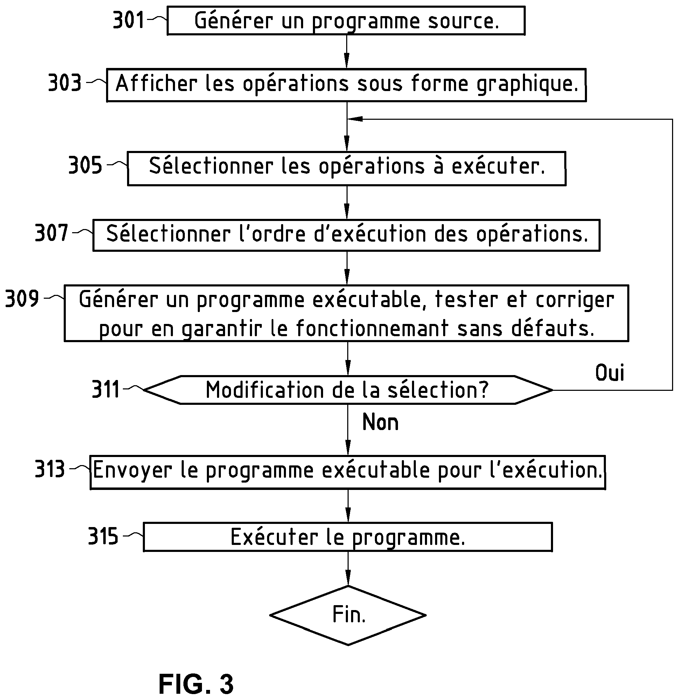

L'organigramme de la figure 3 résume le procédé décrit ci-dessus. A l'étape 301 l'opérateur génère le programme source et puis à l'étape 303 on affiche les opérations sous forme graphique, comme aussi illustré sur les diagrammes des figures 1 et 2. Le diagramme représente le programme source en fonction du temps. A l'étape 305 l'opérateur sélectionne sur le graphique au moins une opération du programme à exécuter. Les sélections sont donc indirectement effectuées dans le programme source. Une fois que les opérations ont été sélectionnées, l'opérateur peut sélectionner l'ordre de l'exécution des opérations à l'étape 307. Cette étape est aussi illustrée sur la figure 2.

A l'étape 309, on compile le programme source pour en extraire un programme exécutable dont on vérifie le fonctionnement sans défaut, c.à.d. qu'on détermine si le programme partiel, possiblement tel que modifié, fonctionne sans défauts. Autrement dit, on détermine si le programme partiel remplit les conditions préétablies, i.e. on vérifie qu'il n'y ait pas de collisions ou d'usinages impossibles. Pour éviter que l'ajout ou le retrait d'opération n'aboutisse à une impossibilité d'usinage ou à des collisions, le système ajoute ou retire des contraintes, des synchronisations, des mouvements de positionnement, de dégagement ou de sélection d'outil dans le code source au moment de la compilation.

Ensuite, à l'étape 311, si on n'effectue pas de modifications, la procédure continue à l'étape 313 par l'envoi du programme exécutable pour l'exécution. Si on effectue des modifications, le procédé continue à l'étape 305. A l'étape 315, on exécute le programme, i.e. on commence l'usinage de la pièce. Il est à noter que les étapes 307 et 311 sont optionnelles. Le procédé peut être modifié en définissant des arrêts intermédiaires dans le programme partiel exécutable.

La solution offerte par la présente invention est particulièrement avantageuse parce qu'elle permet au calculateur de :
- sélectionner des opérations par ressource ou par opérations ;
- d'ajouter ou de retirer automatiquement des instructions du programme partiel (synchronisations, mouvement de positionnement ou de dégagement, sélection d'outils, etc.) ;
- de vérifier avant l'exécution tous les risques de collisions ou d'usinages impossibles.

On pourrait aussi envisager plusieurs variantes dans les configurations expliquées ci-dessus sans sortir du cadre de la présente invention.

## Revendications

1. Un procédé de pilotage d'une machine-outil pour usiner une pièce, le procédé comprenant :
• la définition (301) d'un programme source comprenant plusieurs opérations à faire exécuter à la machine-outil pour usiner une pièce ;
• la définition d'un programme partiel par une sélection (305) parmi les opérations du programme source de manière que le programme partiel comprenne au moins une opération du programme source mais ne comprenne pas toutes les opérations du programme source ;
• la génération (309), à partir du programme partiel, par compilation du programme source, d'un programme exécutable dont on vérifie le fonctionnement sans défaut, c'est-à-dire que le programme partiel fonctionne sans défauts, et pour lequel, en ajoutant ou retirant des contraintes, des synchronisations, des mouvements de positionnement, de dégagement ou de sélection d'outil dans le programme source au moment de la compilation, on s'assure que le retrait d'opérations du programme source n'aboutisse pas à des usinages impossibles ou à des collisions ; et
• l'exécution (315) du programme exécutable pour usiner la pièce.

2. Le procédé selon la revendication 1, dans lequel le procédé comprend en plus l'affichage graphique (303) des opérations.

3. Le procédé selon la revendication 2, dans lequel la sélection est effectuée interactivement par l'opérateur sur l'affichage graphique.

4. Le procédé selon l'une quelconque des revendications précédentes, dans lequel le procédé comprend en plus la sélection (307) de l'ordre d'exécution des opérations sélectionnées.

5. Le procédé selon l'une quelconque des revendications précédentes, dans lequel l'ajout ou le retrait des contraintes, des synchronisations, des mouvements de positionnement, de dégagement ou de sélection d'outil dans le programme source au moment de la compilation est effectué automatiquement sans intervention de l'utilisateur pour garantir le fonctionnement sans défaut du programme exécutable.

6. Le procédé selon l'une quelconque des revendications précédentes, dans lequel le programme exécutable contient des instructions à plusieurs ressources de la machine-outil pour usiner la pièce.

7. Le procédé selon la revendication 6, dans lequel la ressource est un outil de la machine-outil.

8. Le procédé selon la revendication 6 ou 7, dans lequel la sélection exclut au moins une de ces ressources.

9. Le procédé selon l'une quelconque des revendications précédentes, dans lequel le procédé comprend en plus l'ajout d'arrêts intermédiaires dans le programme exécutable.

10. Un dispositif pour piloter une machine-outil pour usiner une pièce, le dispositif comprenant des moyens aptes à :
• définir un programme source comprenant plusieurs opérations à faire exécuter à la machine-outil pour usiner une pièce ;
• définir un programme partiel par une sélection parmi les opérations du programme source de manière que le programme partiel comprenne au moins une opération du programme source mais ne comprenne pas toutes les opérations du programme source ;
• générer un programme exécutable à partir du programme partiel par compilation du programme source, lesdits moyens étant aptes à vérifier le fonctionnement sans défaut du programme exécutable, c'est-à-dire que le programme partiel fonctionne sans défauts, et, en ajoutant ou retirant des contraintes, des synchronisations, des mouvements de positionnement, de dégagement ou de sélection d'outil dans le programme source au moment de la compilation, à s'assurer que le retrait d'opérations du programme source n'aboutisse pas à des usinages impossibles ou à des collisions; et
• exécuter le programme exécutable pour usiner la pièce.

## Patentansprüche

1. Verfahren zum Steuern einer Werkzeugmaschine zum Bearbeiten eines Werkstücks, das Verfahren umfasst:
• Definition (301) eines Quellprogramms, umfassend eine Vielzahl von Operationen, welche auf der Werkzeugmaschine zum Bearbeiten des Werkstücks ausgeführt werden;
• Definition eines Teilprogramms durch eine Auswahl (305) aus den Operationen des Quellprogramms, so dass das Teilprogramm zumindest eine Operation des Quellprogramms aber nicht alle Operationen des Quellprogramms umfasst;
• Generierung (309), ausgehend von dem Teilprogramm, durch Kompilierung des Quellprogramms eines ausführbaren Programms, dessen problemlose Operation geprüft ist, so dass das Teilprogramm ohne Fehler abläuft und für welches durch Hinzufügen oder Entfernen von Beschränkungen, Synchronisationen, Positionierungsbewegungen, Trennung oder Werkzeugauswahl in dem Quellprogramm zu dem Zeitpunkt der Kompilierung sichergestellt ist, dass das Entfernen von Operationen aus dem Quellprogramm nicht in unausführbaren Bearbeitungen oder in einer Kollision resultiert; und
• Ausführung (315) des ausführbaren Programms zum Bearbeiten des Werkstücks.

2. Verfahren nach Anspruch 1, wobei das Verfahren weiter die grafische Anzeige (303) der Operationen umfasst.

3. Verfahren nach Anspruch 2, wobei die Auswahl interaktiv mit dem Benutzer an der grafischen Anzeige ausgeführt ist.

4. Verfahren nach einem der vorhergehenden Ansprüche, wobei das Verfahren weiter die Auswahl (307) des Befehls umfasst, um die ausgewählten Operationen auszuführen.

5. Verfahren nach einem der vorhergehenden Ansprüche, wobei das Zufügen oder Entfernen von Beschränkungen, von Synchronisationen, von Positionierungsbewegungen, Trennen oder Werkzeugauswahl in dem Quellprogramm zu dem Zeitpunkt der Kompilierung automatisch ohne Intervention des Benutzers ausgeführt wird, um fehlerloses Funktionieren des ausführbaren Programms sicherzustellen.

6. Verfahren nach einem der vorhergehenden Ansprüche, wobei das ausführbare Programm Instruktionen für eine Vielzahl von Mitteln der Werkzeugmaschine zum Bearbeiten des Werkstücks enthält.

7. Verfahren nach Anspruch 6, wobei das Mittel ein Werkzeug der Werkzeugmaschine ist.

8. Verfahren nach Anspruch 6 oder 7, wobei die Auswahl zumindest eines der Mittel ausschliesst.

9. Verfahren nach einem der vorhergehenden Ansprüche, wobei das Verfahren weiter das Zufügen von Zwischenstopps in dem ausführbaren Programm umfasst.

10. Vorrichtung zum Steuern einer Werkzeugmaschine zum Bearbeiten eines Werkstücks, die Vorrichtung umfasst Mittel, eingerichtet zum:
• Definieren eines Quellprogramms, umfassend eine Vielzahl von Operationen, ausführbar auf der Werkzeugmaschine zum Bearbeiten eines Werkstücks;
• Definieren eines Teilprogramms durch eine Auswahl aus den Operationen des Quellprogramms, so dass das Teilprogramm zumindest eine Operation des Quellprogramms enthält aber nicht alle der Operationen des Quellprogramms;
• Generieren eines ausführbaren Programms, ausgehend von dem Teilprogramm, durch Kompilation des Quellprogramms, wobei die Mittel eingerichtet sind, um das problemlose Funktionieren des ausführbaren Programms zu prüfen, so dass das Teilprogramm ohne Fehler operiert, und wobei beim Zufügen oder Entfernen von Beschränkungen, Synchronisationen, Positionierungsbewegungen, Trennen oder Werkzeugauswahl in dem Quellprogramm zu dem Zeitpunkt der Kompilation sichergestellt ist, dass das Entfernen von Operationen aus dem Quellprogramm nicht zu unausführbaren Bearbeitungen oder in Kollisionen resultiert; und
• Ausführen des ausführbaren Programms zum Bearbeiten des Werkstücks.

## Claims

1. A method of controlling a machine tool for machining a workpiece, the method comprising:
• definition (301) of a source program comprising a plurality of operations to be executed on the machine tool for machining a workpiece;
• definition of a partial program through a selection (305) from among the operations of the source program in such a way that the partial program includes at least one operation of the source program but does not include all the operations of the source program;
• generation (309), starting from the partial program, through compiling of the source program, of an executable program whose problem-free operation is checked, that is to say that the partial program operates without errors, and for which, by adding or removing constraints, synchronizations, movements of positioning, disengagement or tool selection in the source program at the moment of the compilation, it is ensured that the removal of operations from the source program does not result in impossible machinings or in collisions; and
• the execution (315) of the executable program for machining the workpiece.

2. The method according to claim 1, wherein the method further comprises the graphic display (303) of the operations.

3. The method according to claim 2, wherein the selection is carried out interactively by the operator on the graphic display.

4. The method according to any one of the preceding claims, wherein the method further comprises the selection (307) of the order of execution of the selected operations.

5. The method according to any one of the preceding claims, wherein the addition or removal of constraints, of synchronizations, of movements of positioning, disengagement or tool selection in the source program at the moment of the compilation is carried out automatically without intervention of the user to ensure error-free functioning of the executable program.

6. The method according to any one of the preceding claims, wherein the executable program contains instructions for a plurality of resources of the machine tool for machining the workpiece.

7. The method according to claim 6, wherein the resource is a tool of the machine tool.

8. The method according to claim 6 or 7, wherein the selection excludes at least one of these resources.

9. The method according to any one of the preceding claims, wherein the method further comprises the addition of intermediate stops in the executable program.

10. A device for controlling a machine tool for machining a workpiece, the device comprising means able to:
• define a source program comprising a plurality of operations to be executed on the machine tool for machining a workpiece;
• define a partial program through a selection from among the operations of the source program in such a way that the partial program includes at least one operation of the source program but does not include all the operations of the source program;
• generate an executable program starting from the partial program by compilation of the source program, the said means being able to check the problem-free functioning of the executable program, that is to say that the partial program operates without errors, and, by adding or removing constraints, synchronizations, movements of positioning, disengagement or tool selection in the source program at the moment of the compilation, to ensure that the removal of operations from the source program does not result in impossible machinings or in collisions; and
• execute the executable program for machining the workpiece.
